(19) Europäisches Patentamt
European Patent Office
Office européen des brevets

(11) Numéro de publication: **0 192 583 B1**

(12) **FASCICULE DE BREVET EUROPEEN**

(45) Date de publication du fascicule du brevet: **24.05.89**

(21) Numéro de dépôt: **86420019.1**

(22) Date de dépôt: **21.01.86**

(51) Int. Cl.[4]: **A 01 N 57/20,** A 01 N 57/22 // (A01N57/22, 47:36, 47:30, 47:24, 47:20, 47:12, 43:90, 43:82, 43:707, 43:70),(A01N57/20, 47:36, 47:30, 47:24, 47:20, 47:12, 43:90, 43:82, 43:707, 43:70)

(54) **Mélanges herbicides à base de composé de type N-(phosphonométhylglycyl)sulfonylamine.**

(30) Priorité: **23.01.85 FR 8501150**

(43) Date de publication de la demande: **27.08.86 Bulletin 86/35**

(45) Mention de la délivrance du brevet: **24.05.89 Bulletin 89/21**

(84) Etats contractants désignés: **AT BE CH DE FR GB IT LI LU NL SE**

(56) Documents cités: **US-A- 4 405 531**

(73) Titulaire: **RHONE-POULENC AGROCHIMIE, 14-20, rue Pierre Baizet, F-69009 Lyon (FR)**

(72) Inventeur: **Bertrand, Albert, 12, Chemin de Boutary, F-69300 Caluire (FR)**
Inventeur: **Borrod, Guy, 38 bis, rue des Granges, F-69005 Lyon (FR)**

(74) Mandataire: **Brachotte, Charles et al, RHONE-POULENC AGROCHIMIE 14-20, Rue Pierre Baizet B.P. 9163, F-69263 Lyon Cedex 09 (FR)**

**EP 0 192 583 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne de nouvelles compositions herbicides comprenant des mélanges d'herbicides et notamment au moins un herbicide de la famille chimique des N-(phosphonométhylglycyl) sulfonylamines ainsi que l'application de ces compositions herbicides en agriculture.

On connaît de nombreux produits à groupe aminométhylphosphonique ayant des propriétés herbicides, notamment dans les brevets français 2 129 327, 2 281 375, 2 251 569, 2 413 398, 2 463 149, européens 53 871, 54 382, 73 574, américains US 3 160 632, 3 455 675, 3 868 407, 4 388 103, 4 397 676, anglais 2 090 596, mondial WO 83/03 608, belges 894 244, 894 245, 894 590, 894 591, 894 592, 894 593, 894 594, 894 595.

Il est cependant toujours souhaitable d'élargir le domaine des compositions herbicides disponibles, afin de mieux répondre à la totalité des besoins des agriculteurs. On connaissait bien certains amides à groupe aminométhylphosphonique, mais ces produits étaient soit peu actifs soit inactifs.

Un but de la présente invention est, par ailleurs, de fournir des compositions herbicides ayant une activité forte et rapide.

Un autre but de la présente invention est de fournir des compositions herbicides ayant une bonne biodégradabilité.

Un autre but de la présente invention est de fournir des compositions herbicides de postémergence, à large spectre d'activité, ayant au moins partiellement une systémie descendante, éventuellement sélectives de certaines cultures.

Un autre but de l'invention est de fournir des compositions herbicides ayant une bonne persistance dans le sol, notamment une persistance suffisante pour agir contre les levées échelonnées (c'est-à-dire contre les mauvaises herbes et autres végétaux qui poussent et se développent de manière étalée dans le temps).

D'autres buts et avantages de l'invention apparaitront au cours de la description qui va suivre.

Il a maintenant été trouvé que ces buts pouvaient être atteints, en tout ou partie, grâce aux compositions selon l'invention.

Les compositions herbicides selon l'invention, sont donc des compositions caractérisées en ce qu'elles comprennent une matière active de formule:

$$O{=}\underset{\displaystyle OR^3}{\overset{\displaystyle OR^2}{P}}{-}CH_2{-}NH{-}CH_2{-}CO{-}\underset{\displaystyle R}{N}{-}SO_2{-}R^1 \qquad (I)$$

dans laquelle:

– $R^1$ représente un radical hydrocarboné, spécialement alkyle, aryle ou cycloalkyle, ces divers radicaux pouvant éventuellement être substitués; comme substituants, on peut citer en particulier, les atomes d'halogène et les groupes phényle, cyano, alkyle, alkoxyle, carboxylate d'alkyle, dans lesquels les groupes alkyle ont de préférence de 1 à 4 atomes de carbone; $R^1$ a le plus souvent de 1 à 18 atomes de carbone, de préférence de 1 à 7 atomes de carbone, et plus spécialement de 3 à 7 atomes de carbone lorsqu'il s'agit d'un groupe cycloalkyle; de préférence il s'agit d'un radical alkyle ayant de 1 à 4 atomes de carbone, éventuellement halogéné, notamment chloré ou fluoré, par exemple $CF_3$,

– R représente l'atome d'hydrogène ou a l'une des significations donnée pour $R^1$, et est de préférence un groupe alkyle de 1 à 4 atomes de carbone,

– $R^2$ et $R^3$ représentent l'atome d'hydrogène ou sont tels que $OR^2$ et $OR^3$ sont des groupements hydrolysables; $R^2$ et $R^3$ peuvent être notamment un radical alkyle ou aryle (de préférence alkyle ou phényle), éventuellement substitués, notamment par des substituants tels que ceux indiqués pour $R_1$; ils ont généralement, de 1 à 12 atomes de carbone et de préférence de 1 à 8 atomes de carbone,

ladite matière active de formule (I) recouvrant aussi les sels de ces divers produits (notamment les sels des groupes P–OH et ceux de l'atome d'azote du groupe NH, qui devient alors un groupe ammonium) et en particulier les sels acceptables en agriculture de ces produits (les sels acceptables en agriculture incluent les sels de métaux alcalins, notamment de sodium et de potassium, les sels de métaux alcalino-terreux, les sels d'ammonium primaires, secondaires, tertiaires ou quaternaires, les sels de sulfonium. D'autres sels de l'invention sont les sels d'addition avec un acide comme les chlorures, sulfates, phosphates et autres sels dérivés d'acides ayant un pk inférieur ou égal à 2,5),

ladite matière active de formule (I) étant associée avec au moins une matière active du groupe (II), c'est-à-dire une matière active choisie dans le groupe constitué par les chloroacétamides (notamment l'alachlor et le métolachlor), les triazines (notamment la simazine, l'atrazine et la prométryne), les phénylurées (notamment le diuron, l'isoproturon et le linuron), les thiadiazolylurées (notamment le tébuthiuron et l'éthidimuron), les sulfonylurées (notamment le sulfométuron, le chlorsulfuron, le metsulfuron), les benzothiazolylurées (notamment le méthabenzthiazuron), les nitroanilines (notamment l'oryzaline et la trifluraline), les phénoxynicotinanilides (notamment le diflufenican), les amides (notamment le napropamide, le propanil), les oxadiazoles (notamment l'oxadiazon et le diméfuron), l'aminotriazole, l'acide picolinique (picloram), les dérivés d'acides phénoxybenzoïques (notamment le bifénox, l'acifluorfen, l'acifluorfen-sodium, le fomesafen, l'oxyfluorfen et les esters de l'acifluorfen et d'alcool aliphatiques ou de glycolates ou de lactates), les dérivés phénoxypropioniques (notamment le quizalofop éthyl, le fluazifop butyl), les aryloxyacides (notamment le 2,4-D, le 2,4-DP, les MCPA, MCPP), les acides benzoïques (notamment le dicamba), les acides propioniques (notamment le dalapon), les triazine-ones (notamment la métribuzine), les carbamates (notamment le carbétamide, l'EPTC, l'asulam), les pyridazinones (notamment le norflurazon), les pyridones (notamment la fluridone), les composés d'ammonium quaternaires (notamment le diquat et le paraquat), les uraciles (notamment le bromacil), les hydroxybenzonitriles (notamment le bromoxynyl et l'ioxynyl), les imidazolinones (notamment l'imazaquin et l'imazapur).

Les produits de formule (I) peuvent être préparés par exemple selon ce qui est décrit dans la demande de brevet européen n° 135 454.

Les produits du groupe (II) sont des produits connus, la plupart d'entre eux étant décrits en détail dans des ouvrages tels que «The pesticidal manual» édité par «The british crop protection council» dont la 7ème édition date de 1983. Les noms chimiques des produits du groupe (II) utilisés dans les exemples sont indiqués au tableau (IV).

Les compositions selon l'invention sont le plus souvent de type binaire (une seule matière active du groupe (II) mais on utilise aussi quelquefois des associations ternaires (deux matières actives du groupe II) ou quaternaires (trois matières actives du groupe II).

Le rapport pondéral de matière active de formule (I) par rapport à la (ou les) matière(s) active(s) du groupe (II) est généralement compris entre 0,2 et 10 de préférence entre 0,25 et 4; ce rapport peut néanmoins atteindre des valeurs plus élevées, aussi grandes que 100, avec des matières actives telles que le picloram et surtout les sulfonylurées.

Dans le présent exposé, les exemples qui sont donnés, le sont à titre non limitatif et illustrent comment des compositions selon l'invention peuvent être réalisées et mises en œuvre; les pourcentages sont, sauf indication contraire, des pourcentages pondéraux; les termes prélevée et préémergence sont synonymes; il en est de même pour les termes postlevée et postémergence.

Parmi les composés de formule (I) préfère les composés dans lesquels R et $R^1$ sont un groupe alkyle de 1 à 4 atomes de carbone, $R^2$ et $R^3$ sont l'atome d'hydrogène ou un groupe alkyle de 1 à 4 atomes de carbone ou un groupe phényle ainsi que les sels de ces divers composés.

Parmi les composés du groupe (II), les composés suivants sont préférés lorsqu'on recherche une bonne persistance: simazine, atrazine, prométryne, diuron, chlorsulfuron, oryzaline, napropamide, oxadiazon, diméfuron, picloram, fomesafen, bromacil, imazaquin.

Pour leur emploi pratique, les matières actives des compositions selon l'invention sont rarement utilisées seules. Le plus souvent ces compositions herbicides, contiennent les matières actives selon l'invention tel que décrit précédemment en association avec les supports solides ou liquides, acceptables en agriculture et les agents tensio-actifs également acceptables en agriculture. En particulier sont utilisables les supports inertes et usuels et les agents tensio-actifs usuels. Ces compositions font également partie de l'invention.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... ainsi que d'autres matières actives connues à propriétés pesticides (notamment insecticides, fongicides ou herbicides) ou à propriétés régulatrices de la croissance des plantes. Plus généralement les composés utilisés dans l'invention peuvent être associés à tous les additifs solides ou liquides correspondant aux techniques habituelles de la mise en formulation.

Les doses d'emploi des composés utilisés dans l'invention peuvent varier dans de larges limites, notamment selon la nature des adventices à éliminer et le degré d'infestation des zones devant être desherbées.

D'une façon générale, les compositions selon l'invention contiennent habituellement de 0,05 à 95% environ de matières actives (formule (I) et groupe (II) ) selon l'invention, de 1% à 95% environ de un ou plusieurs supports solides ou liquides et éventuellement de 0,1 à 50% (de préférence 5 à 40%) environ de un ou plusieurs agents tensioactifs.

Selon ce qui a déjà été dit les matières actives utilisées dans l'invention sont généralement associées à des supports et éventuellement des agents tensioactifs.

Par le terme «support», dans le présent exposé, on désigne une matière organique ou minérale, naturelle ou synthétique, avec laquelle les matières actives sont associées pour faciliter leur application sur la plante, sur des graines ou sur le sol. Ce support est donc généralement inerte et il doit être acceptable en agriculture, notamment sur la plante traitée.

Comme supports solides (ou charges) on peut citer les charges minérales ou synthétiques telles que le kaolin, l'attapulgite, la montmorillonite, la bentonite, le talc, la terre à foulon, la terre de diatomée, le kieselguhr, les carbonates de calcium et de magnésium, la silice synthétique précipitée, l'alumine, les silicates et silicoaluminates alcalins, les résines, cires, engrais solides. On peut aussi utiliser des charges hydrosolubles telles que les sulfates de sodium ou d'ammonium et l'urée.

Comme supports liquides on peut citer l'eau, les alcools (notamment le butanol), les esters (notamment l'acétate de méthyl-glycol), les cétones (notamment la cyclohexanone et l'isophorone), les fractions de pétrole, les hydrocarbures aromatiques (notamment les xylènes), ou paraffiniques) les hydrocarbures chlorés aliphatiques (notamment le trichloroéthane) ou aromatiques (notamment les chlorobenzènes), les solvants hydrosolubles tels que le diméthylformamide, le diméthylsulfoxyde, la N-méthyl-pyrrolidone.

L'agent tensioactif peut être un agent émulsionnant, dispersant ou mouillant de type ionique ou non ionique ou un mélange de tels agents tensioactifs.

Comme agents mouillants non ioniques on peut ainsi citer les alkylphénols polyéthoxylés

(notamment les octyl-, nonyl- et tributyl-phénols ayant de 6 à 18 motifs oxyéthylène), les alcools gras polyéthoxylés (notamment les alcools de $C_{10}$ à $C_{18}$ ayant de 6 à 18 motifs oxyéthylène), les amines grasses polyéthoxylées (notamment l'amine de suif, ou tall oil, ayant de 2 à 40 motifs oxyéthylène), les esters d'acides gras et de polyols (de type glycérine ou sucres) polyéthoxylés (notamment les laurate et stéarate de sorbitan ayant de 5 à 20 motifs oxyéthylène).

Comme agents mouillants, on peut citer les sels-esters alkylnaphtalène sulfonates (notamment les isopropyl-, butyl- et dibutylnaphtalène sulfonate de sodium ou de potassium, les sels-esters sulfates d'alcools gras (notamment les laurylsulfates de sodium ou de potassium), les sels-esters sulfosuccinates d'alcools gras (notamment les dioctyl-sulfosuccinates de sodium ou de potassium), les dérivés de la taurine (notamment les alkyltaurates, les aryl-N-méthyltaurides, l'oleylméthyltauride de sodium).

Comme agents dispersants non ioniques, on peut citer les arylphénols polyéthoxylés (notamment les di- et tri-(phényléthyl) phénols comprenant 18 à 40 motifs oxyéthylène).

Comme agents dispersants anioniques, on peut citer les polymères polycarboxyliques salifiés (tels que les polymères polycarboxylates et polyacrylates de sodium), les polycondensats de formol et diphénolsulfonates ou d'alkylnaphtalène sulfonates (notamment de méthylnaphtalène sulfonate de sodium), les esters-sels ou acides phosphoriques d'alkyl- ou aryl-phénols polyoxyéthylénés (notamment les esters phosphoriques de nonylphénols ayant 6 à 18 motifs oxyéthylène sous forme acide ou sel de potassium ainsi que les esters phosphoriques de di- ou tri-(phényléthyl) phénol ayant 18 à 40 motifs oxyéthylène sous forme acide ou sel), les alcools gras polyoxyéthylénés phosphatés (notamment les alcools gras $C_{11}$ à $C_{19}$ ayant 6 à 18 motifs oxyéthylène), les lignosulfonates alcalins ou alcalinoterreux.

Les compositions selon l'invention, surtout lorsqu'il s'agit de granulés autodispersibles, peuvent aussi contenir de 1 à 50% en poids de liant naturel ou synthétique.

Comme liant naturel, on peut citer l'amidon et ses dérivés (notamment l'amidon moidifié et la dextrine), les dérivés de la cellulose (notamment la carboxyméthylcellulose, l'hydroxyéthylcellulose, l'hydroxypropylméthylcellulose), les sucres (comme le lactose, le mannitol, le sorbitol), les gommes (telles que la gomme arabique et les gommes xanthane).

Comme liant synthétique, on peut citer les polymères (notamment l'alcool polyvinylique, le polyacétate de vinyle, la polyvinylpyrrolidone, les polyacrylates alcalins), les polycondensats (spécialement les polyéthers tels que les polyglycols; les copolycondensats d'anhydride maléïque; les polycondensats de formol et d'alkylnaphtalène sulfonates, tels que le polycondensat de formol et de méthylnaphtalène sulfonate de sodium), les lignosulfonates alcalins.

La présence d'au moins un agent tensioactif dans les compositions selon l'invention est généralement indispensable lorsque les matières actives et/ou le support inerte ne sont pas solubles dans l'eau et que l'agent vecteur de l'application est l'eau.

Pour leur application, les compositions selon l'invention sont sous des formes assez diverses, solides ou liquides; il s'agit de formes relativement diluées, tandis que les compositions convenables pour le transport, le commerce et le stockage sont plutôt des compositions concentrées.

Comme formes de compositions solides, on peut citer les poudres mouillables et les poudres pour poudrage (à teneur en matières actives pouvant aller jusqu'à 100%) et les granulés (de préférence autodispersibles), notamment ceux obtenus par extrusion, par compactage, par imprégnation d'un support granulé, par granulation à partir d'une poudre (la teneur en matières actives de formule (I) et de groupe (II) dans ces granulés étant entre 0,5 et 80% pour ces derniers cas).

Comme formes de compositions liquides ou destinées à constituer des compositions liquides lors de l'application, on peut citer les solutions et les suspensions concentrées ou encore les pâtes. Toutefois, dans l'invention on préfère les compositions concentrées à l'état solide.

Les suspensions concentrées, qui sont applicables en pulvérisation, sont préparées de manière à obtenir un produit fluide stable ne se déposant pas (broyage fin) et elles contiennent habituellement de 10 à 75% de matières actives, de 0,5 à 15% d'agents tensioactifs, de 0,1 à 10% d'agents thixotropes, de 0 à 10% d'additifs appropriés, comme des anti-mousses, des inhibiteurs de corrosion, des stabilisants, des agents de pénétration et des adhésifs et, comme support, de l'eau ou un liquide organique dans lequel les matières actives sont peu solubles ou non solubles: certaines matières solides organiques ou des sels minéraux peuvent être dissous dans le support pour aider à empêcher la sédimentation ou comme antigels pour l'eau.

A titre d'exemple, voici une composition de suspension concentrée (Exemple 1):

| | |
|---|---|
| – matières actives | 500 g |
| – phosphate de tristyrylphénol polyéthoxylé | 50 g |
| – alkylphénol polyéthoxylé | 50 g |
| – polycarboxylate de sodium | 20 g |
| – éthylène glycol (antigel) | 50 g |
| – huile organopolysiloxanique (antimousse) | 1 g |
| – polysaccharide (épaississant) | 1,5 g |
| – eau | 316,5 g |

Selon cet exemple 1, on peut réaliser en particulier des associations avec les produits suivants:
Produits de formule (I)

Composé n° 1: composé de formule (I) dans laquelle R et $R^1$ sont le groupe méthyle et $R^2$ et $R^3$ sont l'atome d'hydrogène

Composé n° 2: Composé de formule (I) dans

laquelle R et $R^1$ sont le groupe méthyle et $R^2$ est l'atome d'hydrogène et $R^3$ est un groupe phényle

Composé n° 3: Composé de formule (I) dans laquelle R et $R^1$ sont le groupe méthyle et $R^2$ et $R^3$ sont le groupe phényle. Produits de groupe (II): simazine, atrazine, prométryne, diuron, isoproturon, linuron, métabenzthiazuron, oryzaline, trifluraline, diflufenican, napropamide, propanil, oxadiazon, aminotriazole, picloram, bifenox, acifluorfen-sodium, quizalofop, 2,4-D, MCPA, MCPP, carbétamide, asulam, bromoxynil, ioxynyl.

On réalise selon l'exemple 1, les exemples 2 à 10 utilisant les conditions définies dans le tableau suivant (I):

Tableau (I)

| Exemple | Quantité en grammes de l'un des composés n° 1 à 3 | | Nature et quantité en grammes de composés du groupe (II) | |
|---|---|---|---|---|
| 2 | (n° 1) | 300 | Atrazine | 200 |
| 3 | (n° 2) | 250 | Oryzaline | 250 |
| 4 | (n° 1) | 450 | Diflufénican | 50 |
| 5 | (n° 2) | 350 | Oxadiazon | 150 |
| 6 | (n° 2) | 250 | Aminotriazole | 250 |
| 7 | (n° 3) | 300 | Bifénox | 200 |
| 8 | (n° 1) | 350 | Acifluorfen Na | 150 |
| 9 | (n° 3) | 250 | Asulame | 250 |
| 10 | (n° 1) | 350 | Bromoxynil | 150 |

Les poudres mouillables (ou poudre à pulvériser) sont donc avec les granulés autodispersibles, les compositions préférées selon l'invention. Les poudres mouillables sont habituellement préparées de manière qu'elles contiennent 20 à 95% de matières actives, et elles contiennent habituellement, en plus du support solide, de 0 à 25% d'un agent mouillant, de 1 à 15% d'un agent dispersant, et, quand c'est nécessaire, de 0 à 10% d'un ou plusieurs stabilisants et/ou autres additifs, comme des agents de pénétration, des adhésifs, ou des agents antimottants, colorants, etc.

A titre d'exemple, voici diverses compositions de poudres mouillables

Exemple 11
- matières actives 50%
- lignosulfonate de calcium (défloculant) 5%
- isopropylnapthalène sulfonate (agent mouillant anionique) 1%
- silice antimottante 5%
- kaolin (charge) 39%

Exemple 12
- matières actives 80%
- alkylnaphtalène sulfonate de sodium 2%
- lignosulfonate de sodium 2%
- silice antimottante 3%
- kaolin 13%

Exemple 13
- matières actives 50%
- alkylnaphtalène sulfonate de sodium 2%
- méthyl cellulose de faible viscosité 2%
- terre de diatomées 46%

Exemple 14
- matières actives 90%
- dioctylsulfosuccinate de sodium 0,2%
- silice synthétique 9,8%

Exemple 15
- matières actives 400 g
- lignosulfonate de sodium 50 g
- dibutylnaphtalène sulfonate de sodium 10 g
- silice 540 g

Exemple 16
- matières actives 250 g
- isooctylphénoxy-polyoxyéthylène-éthanol 25 g
- mélange équipondéral de craie de Champagne et d'hydroxyéthylcellulose 17 g
- aluminosilicate de sodium 543 g
- kieselguhr 165 g

Exemple 17
- matières actives 100 g
- mélange de sels de sodium de sulfates d'acides gras saturés 30 g
- produit de condensation d'acide naphtalène sulfonique et de formaldéhyde 50 g
- kaolin 820 g

Exemple 18
- matières actives 40%
- isopropylnaphtalène sulfonate de sodium 2%
- lignosulfonate de sodium 5%
- silice précipitée 10%
- kaolin q.s.p. pour 100%

Exemple 19
- matières actives 40%
- laurylsulfate de sodium 4%
- tri(phényléthyl)phénol à 40 motifs oxyéthylène 6%
- silice précipitée 15%
- attrapulgite q.s.p. pour 100%

Exemple 20
- matières actives 40%
- amine de suif à 25 motifs oxyéthylène 10%
- alcool $C_{13}$ à 6 motifs oxyéthylène 5%
- silice précipitée 15%
- attrapulgite q.s.p. pour 100%

Exemple 21
- matières actives 50%
- oléylméthyltauride de sodium 2%

- méthylnaphtalène sulfonate de sodium polycondensé avec du formol 4%
- terre de diatomées 20%
- kieselguhr q.s.p. pour 100%

Exemple 22
- matières actives 50%
- nonylphénol à 18 motifs oxyéthylène 2%
- nonylphénol phosphate à 10 motifs d'oxyéthylène 4%
- silice précipitée 10%
- montmorillonite q.s.p. pour 100%

Exemple 23
- matières actives 60%
- dioctylsulfosuccinate de sodium 2%
- méthylnaphtalènesulfonate de sodium polycondensé 3%
- silicoaluminate de sodium 15%
- kaolin q.s.p. pour 100%

Exemple 24
- matières actives 60%
- stéarate de sorbitan (sorbitol déshydraté) à 25 motifs oxyéthylène 5%
- tri(phényléthyl)phénol phosphaté à 18 motifs oxyéthylène 3%
- silice précipitée 10%
- kieselguhr q.s.p. pour 100%

Exemple 25
- matières actives 60%
- oléylméthyltauride de sodium 2%
- tri(phényléthyl)phénol phosphaté à 18 motifs oxyéthylène 3%
- silice synthétique 15%
- kaolin q.s.p. pour 100%

Exemple 26
- matières actives 80%
- isopropylnaphtalènesulfonate de sodium 2%
- méthylnaphtalènesulfonate de sodium condensé 3%
- silice synthétique 15%
- kaolin q.s.p. pour 100%

Exemple 27
- matières actives 80%
- laurylsulfate de sodium 3%
- polycarboxylate de sodium 3%
- silicoaluminate de sodium q.s.p. pour 100%

Dans ces exemples 11 à 27, on utilise comme matières actives l'une choisie parmi les composés n° 1 à 3 et l'autre appartenant au groupe suivant simazine, atrazine, prométryne, diuron, isoproturon, linuron, métabenzthiazuron, trifluraline, diflufenican, napropamide, oxadiazon, diméfuron, bifenox, quizalofop, dalapon, carbétamide et autres matières actives du tableau (IV).

Plus spécifiquement on peut réaliser les exemples 30 à 41 dans les conditions définies dans le tableau (II). Les mélanges indiqués dans le tableau (V) pourraient être également utilisés.

Tableau (II)

| Exemple | Composition dérivée d'exemples 11 à 17 | Quantité en grammes (ou pourcentage) de l'un des composés 1 à 3 | | Nature et quantité en grammes (ou pourcentage) de composé du groupe (II) | |
|---|---|---|---|---|---|
| 30 | 11 | (n° 1) | 30% | Atrazine | 20% |
| 31 | 12 | (n° 2) | 50% | Diuron | 30% |
| 32 | 13 | (n° 3) | 30% | Simazine | 20% |
| 33 | 14 | (n° 3) | 60% | Diméfuron | 30% |
| 34 | 11 | (n° 2) | 25% | Isoproturon | 25% |
| 35 | 16 | (n° 3) | 150 g | Bifénox | 100 g |
| 36 | 15 | (n° 1) | 200 g | Napropamide | 200 g |
| 37 | 12 | (n° 1) | 55% | Oxadiazon | 25% |
| 38 | 17 | (n° 2) | 85 g | Quizalofop éthyl | 15 g |
| 39 | 13 | (n° 2) | 20% | Carbétamide | 30% |
| 40 | 15 | (n° 3) | 300 g | Diflufénican | 100 g |
| 41 | 14 | (n° 1) | 30% | Dalapon | 60% |

Pour obtenir des poudres à pulvériser ou poudres mouillables, on mélange intimement les matières actives dans des mélangeurs appropriés avec les substances additionnelles ou on imprègne les matières actives fondues sur la charge poreuse et on broie avec des moulins ou autres broyeurs appropriés. On obtient par là des poudres à pulvériser dont la mouillabilité et la mise en suspension sont avantageuses; on peut les mettre en suspension avec de l'eau à toute concentration désirée et cette suspension est utilisable très avantageusement en particulier pour l'application sur les feuilles de végétaux.

Les granulés «autodispersibles» (en langue anglaise «dry flowable»; il s'agit plus exactement de granulés facilement dispersibles dans l'eau) ont une composition sensiblement voisine de celle des poudres mouillables. Ils peuvent être préparés par granulation de formulations décrites pour les poudres mouillables, soit par voie humide (mise en contact des matières actives finement divisées avec la charge inerte et avec un peu d'eau, par exemple 1 à 20%, ou de solution aqueuse de dispersant ou de liant (décrit plus haut), puis séchage et tamisage), soit par voie sèche (compactage puis broyage et tamisage).

A titre d'exemple, voici quelques formulations de granulés autodispersibles:

Exemple 50:

| | |
|---|---|
| – matières actives | 800 g |
| – alkylnaphtalène sulfonate de sodium | 20 g |
| – méthylène bis naphtalène sulfonate de sodium | 80 g |
| – kaolin | 100 g |

Exemple 51:

| | |
|---|---|
| – matières actives | 40% |
| – amine de suif à 25 motifs oxyéthylène | 10% |
| – silice synthétique précipitée | 10 g |
| – polyvinylpyrrolidone | 5% |
| – bentonite q.s.p. pour | 100% |

Exemple 52:

| | |
|---|---|
| – matières actives | 40% |
| – alcool $C_{13}$ à 6 motifs oxyéthylène | 5% |
| – silice synthétique précipitée | 5% |
| – sulfate d'ammonium | 20% |
| – hydroxyéthylcellulose | 2% |
| – amidon q.s.p. pour | 100% |

Exemple 53:

| | |
|---|---|
| – matières actives | 40% |
| – nonylphénol à 10 motifs oxyéthylène | 2% |
| – lignosulfate de calcium | 10% |
| – polyvinylpyrrolidone | 5% |
| – kaolin q.s.p. pour | 100% |

Les exemples exacts de matières actives et de proportions particulières à réaliser selon ces exemples 50 à 53 sont semblables à ceux des mélanges de matières actives des tableaux (II) et (V).

A la place des poudres mouillables, on peut réaliser des pâtes. Les conditions et modalités de réalisation et d'utilisation de ces pâtes sont semblables à celles des poudres mouillables ou poudres à pulvériser.

Comme cela a déjà été dit, les dispersions et émulsions aqueuses, par exemple les compositions obtenues en diluant à l'aide d'eau une poudre mouillable ou une suspension concentrée selon l'invention, sont comprises dans le cadre général des compositions utilisables dans la présente invention. Les émulsions peuvent être du type eau-dans-l'huile ou huile-dans-l'eau et elles peuvent avoir une consistance épaisse comme celle d'une «mayonnaise».

Toutes ces dispersions ou émulsions aqueuses ou bouillies sont applicables aux zones ou cultures à désherber par tout moyen convenable, principalement par pulvérisation, à des doses qui sont généralement de l'ordre de 50 à 1 200 litres de bouillie à l'hectare, de préférence de 80 à 250 l/ha.

Selon le procédé selon l'invention décrit jusqu'ici on applique aux zones à désherber les produits de formule (I) et du groupe (II) en une application unique; le mélange des deux matières actives peut être réalisé préalablement avec dilution du concentrat par de l'eau au moment de l'emploi, ou extemporanément par mélange de deux matières actives ou des concentrats de matières actives directement dans l'eau devant servir à l'application.

Selon un autre procédé de désherbage, on applique séquentiellement et à des périodes distinctes le produit de formule (I) et le ou les produit(s) du groupe (II), ces derniers pouvant alors être éventuellement appliqué(s) sur le sol. Aussi l'invention concerne également les compositions herbicides comprenant les matières actives de formule (I) et de groupe (II) comme produits de combinaison pour une utilisation herbicide simultanée, séparée ou étalée dans le temps Lorsqu'on effectue de tels traitements séquentiels, l'intervalle d'application entre les deux traitements est avantageusement compris entre une et trois semaines, le ou les produit(s) du groupe (II) pouvant parfois être appliqué(s) les premiers.

C'est ainsi que l'on peut utiliser dans l'invention, pour appliquer des produits de prélevée du groupe (II), des granulés destinés à être disposés sur le sol.

La présente invention concerne aussi un procédé de désherbage qui consiste à appliquer aux plantes devant être détruites une quantité efficace d'une composition selon l'invention.

Les compositions selon l'invention s'appliquent commodément sur la végétation et notamment sur les mauvaises herbes à éliminer lorsque celles-ci présentent un feuillage vert.

Les compositions herbicides et leur application peuvent aussi être mises en œuvre peu avant la récolte de manière à tuer les mauvaises herbes dont les racines subsistent dans le sol après la récolte. On peut ainsi semer très rapidement après la récolte sans qu'il soit nécessaire d'effectuer des opérations mécaniques de désherbage (labourage ou autre).

D'une manière générale, on applique le composé de groupe (I) à des doses comprises entre 0,1 et 10 kg/ha, de préférence entre 0,1 et 6 kg/ha, et en particulier entre 0,1 et 4 kg/ha. On donne ci-après les taux d'application préférés pour les autres matières actives.

C'est ainsi que l'on utilise une triazine, par exemple l'atrazine, on l'applique de préférence entre 0,125 et 4 kg/ha, le rapport pondéral entre le composé du groupe (I) et la triazine se situant

avantageusement entre 1:32 et 32:1, de préférence entre 1:16 et 8:1.

Lorsqu'on utilise un herbicide de la famille des phénylurées, par exemple l'isoproturon, on l'applique de préférence à des doses comprises entre 0,125 et 2 kg/ha, le rapport pondéral entre le composé du groupe (I) et la phénylurée se situant avantageusement entre 1:16 et 32:1, en particulier entre 1:12 et 8:1.

Lorsqu'on utilise un herbicide de la famille des acides phénoxybenzoïques, par exemple le bifénox, on l'applique généralement entre 0,125 et 4 kg/ha, de préférence entre 0,25 et 2 kg/ha, le rapport pondéral entre le composé du groupe (I) et le dérivé d'acide phénoxybenzoïque se situant entre 1:32 et 32:1, plus particulièrement entre 1:16 et 8:1.

Lorsque, dans cette même famille, on utilise l'acifluorfen et/ou l'acifluorfen/sodium, on l'applique de préférence entre 0,06 kg et 1 kg/ha, le rapport pondéral entre le composé du groupe (I) et l'acifluorfen (sodium) étant le plus souvent compris entre 1:8 et 60:1, de préférence entre 1:4 et 32:1.

Lorsqu'on utilise un uracile du type bromacil, on applique ce dernier à des doses comprises entre 0,125 et 10 kg/ha et plus particulièrement entre 0,125 et 3 kg/ha, le rapport pondéral entre le composé du groupe (I) et l'uracile étant avantageusement compris entre 1:80 et 32:1, de préférence entre 1:24 et 16:1.

Si l'on utilise un dérivé phénoxyacide, par exemple le 2,4-D, on l'applique de préférence à des doses comprises entre 0,1 et 5 kg/ha et plus particulièrement entre 0,1 et 2 kg/ha. Le rapport pondéral entre le composé du groupe (I) et le dérivé phénoxyacide se situe alors avantageusement entre 1:40 et 40:1, préférentiellement entre 1:16 et 20:1. On utilise avantageusement le phénoxyacide sous forme d'un de ses sels de métaux alcalins, et plus particulièrement sous forme d'un sel d'amines, ou sous forme d'esters.

Si l'on utilise un carbamate, par exemple l'asulame, on l'applique généralement à des doses comprises entre 0,25 et 7 kg/ha et plus particulièrement entre 0,25 et 4 kg/ha, le rapport pondéral entre le composé du groupe (I) et le carbamate étant généralement compris entre 1:56 et 16:1 et plus particulièrement entre 1:32 et 8:1. L'asulame est préférentiellement sous forme d'un sel de métaux alcalins, en particulier de sodium.

Lorsqu'on utilise un amino-triazole, celui-ci est appliqué de préférence entre 0,5 et 4 kg/ha, le rapport pondéral entre le composé du groupe (I) et l'aminotriazole étant généralement compris entre 1:96 et 8:1, de préférence entre 1:32 et 4:1.

Si l'on utilise le propanil, on l'applique entre 0,25 et 6 kg/ha, le rapport pondéral entre le composé du groupe (I) et le propanil est avantageusement compris entre 1:48 et 16:1 et de préférence entre 1:48 et 4:1.

Lorsqu'on utilise le quizalofop-éthyl, on l'applique entre 0,016 et 1 kg/ha et plus particulièrement entre 0,03 et 0,5 kg/ha, le rapport pondéral entre le composé du groupe (I)et le quizalofop-éthyl étant alors généralement compris entre 1:8 et 250:1 et plus avantageusement entre 1:4 et 60:1.

Si l'on utilise une nicotinamide comme le diflufénican, on l'applique généralement à des doses comprises entre 0,1 et 2 kg/ha et le rapport pondéral entre le composé du groupe (I) et le diflufénican étant alors généralement compris entre 1:16 et 40:1, de préférence entre 1:6 et 20:1.

Dans la famille chimique des imidazolinones, on peut utiliser l'imazapur ou l'imazaquin à des doses comprises entre 0,016 et 0,5 kg/ha et le rapport pondéral entre le composé du groupe (I) et le composé de la famille de l'imidazolinone est le plus souvent compris entre 1:4 et 250:1, plus particulièrement entre 1:4 et 80:1. On utilise avantageusement l'imazapur sous forme de sels d'amines, en particulier d'isopropylamine.

Lorsqu'on utilise un herbicide de type benzonitrile, par exemple le bromoxynil, on l'applique de 0,06 kg à 1 kg/ha. Le rapport pondéral entre le composé du groupe (I) et le dérivé du benzonitrile se situe avantageusement entre 1:8 et 60:1, préférentiellement entre 1:5 et 32:1. Le bromoxynil peut être sous forme de sels de métaux alcalins ou avantageusement sous forme d'esters (octonoate). L'ioxynyl peut être utilisé à la place du bromoxynyl.

Les thiadiazolylurées comme l'éthidimuron peuvent aussi être utilisés. L'éthidimuron est alors appliqué entre 0,125 et 7 kg/ha et plus particulièrement entre 0,25 et 2 kg/ha. Le rapport pondéral entre le composé du groupe (I) et le thiadiazolylurée est le plus souvent compris entre 1:56 et 32:1, en particulier entre 1:16 et 8:1.

Parmi les produits de la famille chimique des oxadiazoles, on peut utiliser l'oxadiazon. On l'applique à des doses comprises entre 0,25 et 4 kg/ha, en particulier entre 0,25 et 2,5 kg/ha. Le rapport pondéral entre le composé du groupe (I) et le dérivé à groupe oxadiazole se situe généralement entre 1:32 et 16:1, préférentiellement entre 1:20 et 8:1.

Dans la même famille chimique, on peut également utiliser le diméfuron qui est appliqué préférentiellement entre 0,25 et 2 kg/ha, le rapport pondéral entre le composé du groupe (I) et l'oxadiazole étant alors compris entre 1:8 et 16:1, notamment entre 1:8 et 8:1.

Lorsqu'on utilise un acide benzoïque comme le dicamba, on l'applique à doses comprises entre 0,05 et 5 kg/ha, préférentiellement entre 0,05 et 0,3 kg/ha, le rapport pondéral entre le composé du groupe (I) et le dérivé d'acide benzoïque (notamment le dicamba) si situant alors avantageusement entre 1:40 et 80:1, de préférence entre 1:3 et 20:1.

Les ammoniums quaternaires sont également utilisés. Ainsi le paraquat est appliqué entre 0,125 et 2 kg/ha. Le rapport pondéral entre le composé du groupe (I) et le paraquat étant généralement compris entre 1:16 et 32:1, plus particulièrement entre 1:8 et 16:1.

Lorsqu'on utilise le composé du groupe (I) avec une triazine, on observe un contrôle particulièrement bon des adventices suivantes: Xanthium pennsylvanicum, Ipomea purpurea, Polygonum convolvulus, Echinochloa crus-galli, Chenopodium, Amaranthus, Sinapis, Capsella, Poa.

Lorsqu'on utilise le composé du groupe (I) avec une phénylurée, l'activité est particulièrement bonne sur les adventices suivantes: Abutilon theophrasti, Sesbania exaltata, Xanthium, pennsylvanicum, Polygonum convolvulus, Ipomea purpurea, Echinochloa crus-galli, Alopecurus, Apera, Poa, Atriplex, Sinapis, Chenopodium, Chrysanthemum, Matricaria, Ranonculus, Stellaris.

Lorsqu'on utilise le composé du groupe (I) avec les dérivés d'acides phénoxy-benzoïques, on observe un bon contrôle des adventices suivantes: Xanthium, pennsylvanicum, Ipomea purpurea, Sesbania exaltata, Abutilon theophrasti, Polygonum convolvulus, Amaranthus, Chenopodium, Sinapis, Datura, Solanum, Setaria, Euphorbia, Bidens, Galinsoga.

Lorsqu'on utilise le composé du groupe (I) avec un uracile, Xanthium, pennsylvanicum, Ipomea purpurea, Echinochloa crus-galli, Lolium multiflorum, Setaria, Digitaria, Bromus, Ambrosia, Amaranthus, Agropyron, Cynodon, Taraxacum, Plantago sont particulièrement bien contrôlés.

Lorsqu'on utilise le composé du groupe (I) avec le dérivé phénoxyacide, on observe un bon contrôle de: Portulaca oleracea, Polygonum convolvulus, Abutilon theophrasti, Xanthium pennsylvanicum, Chenopodium, Sinapis, Solanum, Ramunculus, Amaranthus, Cirsium, Ipomea.

Lorsque'on utilise le composé du groupe (I) avec un carbamate tel que l'asulame, Xanthium pennsylvanicum, Abutilon theophrasti et Sesbania exaltata, Sorghum, halepense, Pteridium, Aquilinicum, Eleusine, Panicum, Digitaria, Setaria, Rumex, Equisetum sont particulièrement bien contrôlées.

Lorsqu'on utilise le composé du groupe (I) avec l'aminotriazole, on note un bon contrôle de Portulaca oleracea, Abutilon theophrasti, Agropyron, Cynodon, Agrostis, Artemisia, Aristolochia, Rumex, Oxalis, Rubus, Equisetum, Leopidium, Tussilago.

Lorsqu'on utilise le composé du groupe (I) avec les amides tels que le propanil, l'efficacité est bonne sur Ipomea purpurea, Polygonum convolvulus, Abutilon theophrasti.

Lorsqu'on utilise le composé du groupe (I) avec les dérivés phénoxypropioniques tels que le quizalofop-éthyl, on observe un bon contrôle de Lolium multiflorum, Echinochloa crus-galli, ainsi que Sesbania exaltata, Alopecurus, Digitaria, Hordeum, Panicum miliaceum, Setaria, Sorghum halepense.

Lorsqu'on utilise le composé du groupe (I) avec le diflufenican, l'activité devient particulièrement bonne sur les adventices suivantes: Portulaca oleracea, Polygonum convolvulus, Abutilon theophrasti, Sesbania exaltata, Echinochloa crus-galli, Galium, Veronica, Stellaria, Matricaria, Anthemis, Chrysanthemum, Papaver rhoeas, Raphanus, Sinapis.

Lorsqu'on utilise le composé du groupe (I) avec une imidazolinone, on observe un bon contrôle de: Xanthium pennsylvanicum, Ipomea purpurea, Portulaca oleracea, Sesbania exaltata, Echinochloa crus-galli, Lolium multiflorum, Amaranthus, Chenopodium, Ambrosia, Hibiscus, Sida, Digitaria, Eleusine, Setaria, Cyperus esculentus, Abutilon theophrasti, Polygonum.

Lorsqu'on utilise le composé du groupe (I) avec un dérivé du benzonitrile, l'efficacité est bonne sur Ipomea purpurea, Portulaca oleracea, Polygonum convolvulus, Amaranthus, Chenopodium, Solanum, Ambrosia, Matricaria, Atriplex, Sinapis, Xanthium.

Lorsqu'on utilise le composé du groupe (I) avec une thiadiazolylurée, l'efficacité est bonne sur les adventices suivantes: Xanthium pennsylvanicum, Ipomea purpurea, Polygonum convolvulus, Abutilon theophrasti, Serbania exaltata, Echinochloa crus-galli, Gallium, Sinapis, Stellaria, Chenopodium, Chrysanthemum, Setaria, Poa.

Lorsqu'on utilise le composé du groupe (I) avec les herbicides de la famille des oxadiazoles, on observe un contrôle particulièrement bon des adventices suivants: Xanthium pennsylvanicum, Polygonum convolvulus, Ipomea purpurea, Echinochloa crus-galli, Amaranthus, Sinapis, Capsella, Euphorbia, Portulaca, Agropyron, Agrostis, Rubus, Festuca, Dactylis, Galium, Polentilla.

Lorsqu'on utilise le composé du groupe (I) avec un dérivé ammonium quaternaire, l'efficacité est bonne sur Xanthium pennsylvanicum, Ipomea purpurea, Polygonum convolvulus, Alopecurus, Setaria, Sinapis, Raphanus, Chrysanthemum, Amaranthus.

Lorsqu'on utilise le composé du groupe (I) avec un acide benzoïque tel que le Dicamba, on observe un bon contrôle de Ipomea, Xanthium, Chenopodium, Polygonum, Amaranthus, Abutilon, Galium, Matricaria, Stellaria, Mercurialis, Veronica, Rumex.

Les compositions selon l'invention ont un très large spectre d'activité, les mauvaises herbes détruites puvant être annuelles ou pérennes, monocotylédones ou dicotylédones. Le tableau n° (III) regroupe certaines de ces adventices importantes à détruire pour permettre un bon établissement ou un bon développement subséquents de cultures telles que céréales, maïs, riz, contonnier, soja, betterave (notamment betterave à sucre), tournesol, colza, canne à sucre, cultures légumières, ainsi que pour obtenir un bon déesherbage de cultures pérennes (vignes, vergers). La réalisation de traitements séquentiels, faisant éventuellement intervenir un traitement de sol, permet parfois d'améliorer l'efficacité du désherbage.

L'exemple suivant, donné à titre non limitatif, illustre l'invention et montre comment elle peut être mise en œuvre.

Exemple 55:

Activité herbicide en serre, en post-levée des espèces végétales.

Dans des pots de 9×9×9 cm remplis de terre agricole légère, on sème un nombre de graines

déterminé en fonction de l'espèce végétale et de la grosseur de la graine.

On recouvre ensuite les graines d'une couche de terre d'environ 3 mm d'épaisseur.

Après humidification de la terre, on laisse les plantes lever et croître jusqu'à une hauteur d'environ 5 à 10 cm. Le stade de traitement pour les graminées est le stade «deuxième feuille en formation». Le stade de traitement pour les dicotylédones est le stade «cotylédons étalées, première feuille vraie en développement».

Les pots sont alors traités par pulvérisation d'une quantité de bouillie par pot correspondant à un volume de 500 l/ha et contenant la matière active à la dose considérée.

Pour chaque matière active, la bouillie a été préparée en diluant par une quantité d'eau déterminée, de façon à obtenir la concentration voulue, d'une part une formulation de type granulé dispersible contenant 20% de la matière active du composé n° 1 et d'autre part une des formulations des matières actives du groupe (II).

Selon la concentration en matière active de la bouillie, la dose de matière active appliquée varie selon les produits, de 16 à 1000 g/ha.

Les pots traités sont ensuite placés dans des bacs destinés à recevoir l'eau d'arrosage, en subirrigation, et maintenus pendant 35 jours à température ambiante sous 70% d'humidité relative.

Au bout de 35 jours, on compte le nombre de plantes vivantes dans les pots traités par la bouillie contenant la matière active à tester et le nombre de plantes vivantes dans un pot témoin traité selon les mêmes conditions, mais au moyen d'une bouillie ne contenant pas de matière active. On détermine ainsi le pourcentage de destruction des plantes traitées par rapport au témoin non traité. Un pourcentage de destruction étal à 100% indique qu'il y a eu destruction complète de l'espèce végétale considérée et un pourcentage de 0% indique que le nombre de plantes vivantes dans le pot traité est identique à celui dans le pot témoin.

Les espèces végétales sur lesquelles ont été effectués les tests sont indiqués, dans le tableau (III), par l'abréviation juxtaposée à côté du nom latin.

Les résultats obtenus selon cet exemple 55 sont présentés au tableau (V). Les doses de matières actives mises en œuvre dans cet exemple sont en général relativement faibles en sorte que les résultats obtenus, même lorsqu'ils sont modestes, sont souvent la preuve d'une forte activité potentielle. L'utilisation de doses supérieures (notamment de doses doubles) à celles indiquées conduit évidemment à des résultats encore meilleurs. Dans de nombreux cas les associations selon l'invention manifestent une synergie par rapport aux matières actives prises isolément.

Tableau (III)

| nom français | nom américain | nom latin |
|---|---|---|
| amarante | pigweed | amaranthus retroflexus |

Tableau (III) – Suite

| nom français | nom américain | nom latin |
|---|---|---|
| abutilon | velvet leaf | abutilon theophrasti (ABU) |
| | prickly sida | sida spinosa |
| | | sesbania |
| | cocklebur | xanthium pennsylvanicum (XAN) |
| | | bidens |
| liseron des champs | | convolvulus arvensis |
| stellaire | chickweed | stellaria media |
| chrysanthème | corn marigold | chrysanthemum segetum |
| digitaire | crabgrass | digitaria sanguinalis |
| setaire | giant foxtail | setaria faberii |
| morelle | black nightshade | solanum nigrum |
| cyperus | | cyperus esculentus |
| panisse | barnyardgrass | echinochloa crus-galli (ECH) |
| folle avoine | wild oat | avena fatua |
| ray-grass | rye grass | lolium multiflorum |
| vulpin | blackgrass | alopecurus myosuroïdes |
| chiendent rampant | quackgrass | agropyron repens |
| chiendent pied de poule | bermudagrass | cynodon dactylon |
| moutarde | wild mustard | sinapis arvensis |
| ipomée | morningglory | ipomea purpurea (IPO) |
| liseron des haies | bindweed | calystegia sepium |
| ronce | blackberry | rubus fructicosus |
| pourpier | purslane | portulaca oleracea (POR) |
| renouée liseron | wild buckwheat | polygonum convolvulus (POL) |
| sesbania | hemp sesbania | sesbania exaltata (SES) |

Tableau (IV)

| Noms communs | Nom chimique (nomenclature française mais numérotation anglo-saxonne de la position des substituants) |
|---|---|
| Atrazine | 2-chloro-4-éthylamino-6-isopropylamino-1,3,5-triazine |
| Isoproturon | 3-(4'-isopropylphényl)-1,1-diméthylurée |

| | |
|---|---|
| Bifénox | 5-(2',4'-dichlorophénoxy)-2-nitrobenzoate de méthyle |
| Bromacil | 5-bromo-3-sec-butyl-6-méthyluracil |
| 2,4 D | (2,4-dichlorophénoxy) acétate d'ammonium |
| Asulame | 4-aminobenzènesulfonylcarbamate de méthyle (sel de sodium) |
| Aminotriazole | 3-amino-1H-1,2,4-triazole |
| Propanil | N-(3,4-dichlorophényl)propionamide |
| Quizalofop-éthyl | 2-[4-(6-chloro-2-quinoxalinyl-oxy)-phényloxy-] propionate d'éthyle |
| Diflufenican | N-(2,4-difluorophényl)-2-(3-trifluméthyl phénoxy) nicotinamide |
| Imazapur | 2-[4,5-dihydro-4-méthyl-4-(isopropyl)-5-oxo-1H-imidazol-2-yl] 3-pyridine carboxylate d'isopropylammonium |
| Acifluorfen-sodium | 5-[2'-chloro-4'-(trifluorométhyl)phénoxy]-2-nitrobenzoate de sodium |
| Bromoxynil | octanoate de 3,5-dibromo-4-hydroxybenzonitrile |
| Ethidimuron | 1-(5-éthylsulfonyl-1,3,5-thiadiazol-2-yl)-1,3-dimé thylurée |
| Oxadiazon | 5-tert-butyl-3-(2',4'-dichloro-5'-isopropyloxyphényl)-1,3,4-oxadiazolin-2-one |
| Paraquat | chlorure de 1,1'-diméthyl-4,4'-bipyridinium |
| Dimefuron | [chloro-2-(diméthyl-3,3 ureido)-4-phényl]-3 (diméthyl-1,1 éthyl)-5 3H oxadiazol-1,3,4 one 2 |
| Dicamba | 3,6-dichloro-2-méthoxybenzoate de diméthylammonium |

Tableau (V)

| Composé du groupe (II) nature | dose | Composé n° 1 en g/ha | XAN | IPO | POR | POL |
|---|---|---|---|---|---|---|
| atrazine | 250 | 250 | 90 | 98 | 100 | 90 |
| | 500 | 125 | 80 | 100 | 100 | 100 |
| | 500 | 250 | 100 | 100 | 100 | 100 |
| isoproturon | 250 | 250 | 100 | 98 | 100 | 30 |
| | 500 | 125 | 90 | 50 | 100 | 20 |
| | 500 | 250 | 90 | 98 | 100 | 60 |
| bifénox | 500 | 250 | 90 | 90 | 100 | 100 |
| | 1000 | 125 | 50 | 90 | 100 | 98 |
| | 1000 | 250 | 70 | 90 | 100 | 100 |
| bromacil | 125 | 250 | 60 | 50 | 100 | 98 |
| | 250 | 125 | 100 | 98 | 100 | 100 |
| | 250 | 250 | 100 | 100 | 100 | 100 |
| | 125 | 250 | 100 | 100 | 100 | 80 |
| 2,4-D | 250 | 125 | 100 | 100 | 100 | 60 |
| | 250 | 250 | 100 | 100 | 100 | 98 |
| asulame | 500 | 250 | 100 | 20 | 10 | 20 |
| aminotriazole | 1000 | 250 | 20 | 0 | 80 | 20 |
| propanil | 500 | 250 | 90 | 90 | 30 | 60 |
| | 1000 | 125 | 100 | 100 | 100 | 100 |
| | 1000 | 250 | 100 | 100 | 90 | 100 |
| quizalofop éthyl | 31 | 250 | 20 | 0 | 50 | 20 |
| carbétamide | 4000 | 250 | 20 | 90 | 30 | 10 |
| diflufénican | 1000 | 250 | 50 | 40 | 100 | 98 |
| imazapur | 31 | 250 | 100 | 90 | 98 | 90 |
| | 62 | 125 | 100 | 80 | 100 | 100 |
| | 62 | 250 | 100 | 90 | 100 | 100 |
| acifluorfen sodium | 62 | 250 | 80 | 100 | 100 | 100 |
| | 125 | 125 | 100 | 100 | 100 | 100 |
| | 125 | 250 | 100 | 100 | 100 | 100 |
| bromoxynyl | 62 | 250 | 100 | 80 | 30 | 80 |
| | 125 | 125 | 100 | 100 | 0 | 90 |
| | 125 | 250 | 90 | 100 | 90 | 100 |
| éthidimuron | 125 | 250 | 100 | 100 | 100 | 100 |
| | 250 | 125 | 100 | 100 | 100 | 100 |
| | 250 | 250 | 100 | 100 | 100 | 100 |
| oxadiazon | 250 | 250 | 100 | 100 | 100 | 100 |
| | 500 | 125 | 30 | 40 | 100 | 100 |
| | 500 | 250 | 100 | 100 | 100 | 100 |
| paraquat | 125 | 250 | 100 | 100 | 98 | 98 |
| | 250 | 125 | 98 | 50 | 100 | 90 |
| | 250 | 250 | 100 | 90 | 98 | 90 |
| diméfuron | 1000 | 250 | 30 | 10 | 100 | 90 |

Tableau (V)

| Composé du groupe (II) nature | dose | Composé n° 1 en g/h | ABU | SES | ECH |
|---|---|---|---|---|---|
| atrazine | 250 | 250 | 60 | 100 | 60 |
| | 500 | 125 | – | 100 | 98 |
| | 500 | 250 | – | 100 | 80 |
| isoproturon | 250 | 250 | 0 | 100 | 60 |
| | 500 | 125 | 100 | 100 | 50 |
| | 500 | 250 | 100 | 100 | 100 |
| bifénox | 500 | 250 | 90 | 100 | 20 |
| | 1000 | 125 | 100 | 100 | 20 |
| | 1000 | 250 | 100 | 98 | 20 |
| bromacil | 125 | 250 | 80 | 80 | 40 |
| | 250 | 125 | 90 | 100 | 98 |
| | 250 | 250 | 100 | 100 | 100 |
| 2,4-D | 125 | 250 | 80 | 100 | 20 |
| | 250 | 125 | 50 | 100 | 10 |
| | 250 | 250 | 100 | 100 | 50 |

| | | | | | |
|---|---|---|---|---|---|
| asulame | 500 | 250 | 90 | 100 | 20 |
| amino-triazole | 1000 | 250 | 100 | 100 | 60 |
| | 500 | 250 | 60 | 100 | 10 |
| propanil | 1000 | 125 | 60 | 100 | 20 |
| | 1000 | 250 | 95 | 100 | 70 |
| quizalo-fop éthyl | 31 | 250 | 80 | 100 | 100 |
| carbétamide | 4000 | 250 | 80 | 100 | 20 |
| diflufénican | 1000 | 250 | 100 | 100 | 80 |
| | 31 | 250 | 100 | 90 | 90 |
| imazapur | 62 | 125 | 100 | 95 | 90 |
| | 62 | 250 | 100 | 95 | 100 |
| | 62 | 250 | 80 | 100 | 20 |
| acifluorfen | 125 | 125 | 60 | 100 | 20 |
| sodium | 125 | 250 | 80 | 100 | 30 |
| | 62 | 250 | 20 | 90 | 30 |
| bromoxynyl | 125 | 125 | 50 | 95 | 10 |
| | 125 | 250 | 60 | 80 | 30 |
| | 125 | 250 | 100 | 98 | 10 |
| éthidimuron | 250 | 125 | 100 | 95 | 10 |
| | 250 | 250 | 100 | 100 | 60 |
| | 250 | 250 | 100 | 100 | 90 |
| oxadiazon | 500 | 125 | 100 | 100 | 98 |
| | 500 | 250 | 100 | 100 | 100 |
| | 125 | 250 | 100 | 100 | 100 |
| paraquat | 250 | 125 | 100 | 100 | 95 |
| | 250 | 250 | 100 | 100 | 100 |
| diméfuron | 1000 | 250 | 100 | 100 | 50 |

## Revendications

1. Compositions caractérisées en ce qu'elles comprennent une matière active de formule:

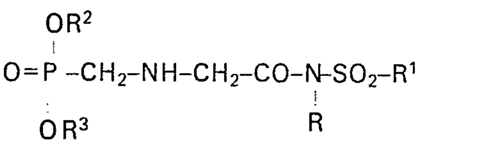

(I)

dans laquelle:

– $R^1$ représente un radical hydrocarboné, spécialement alkyle, aryle ou cycloalkyle, ces divers radicaux pouvant éventuellement être substitués notamment par des atomes d'halogène ou des groupes phényle, cyano, alkyle, alkoxyle, carboxylate d'alkyle,

– R représente l'atome d'hydrogène ou a l'une des significations donnée pour $R^1$, et est de préférence, un groupe alkyle de 1 à 4 atomes de carbone,

– $R^2$ et $R^3$ représentent l'atome d'hydrogène ou sont tels que $OR^2$ et $OR^3$ sont des groupements hydrolysables, notamment alkyle ou aryle, éventuellement substitués, notamment par des substituants tels que ceux indiqués pour $R_1$, ou un sel de ces divers produits, ladite matière active de formule (I) étant associée avec au moins une matière active du groupe (II), c'est-à-dire une matière active choisie dans le groupe constitué par les chloroacétamides, les triazines, les phénylurées, les thiadiazolylurées, les sulfonylurées, les benzothiazolylurées, les nitroanilines, les phénoxynicotinanilides, les amides, les oxadiazoles, l'aminotriazole, l'acide picolinique, les dérivés d'acides phénoxybenzoïques, les dérivés phénoxypropioniques, les aryloxyacides, les acides benzoïques, les acides propioniques, les triazine-ones, les carbamates, les pyridazinones, les pyridones, les composés d'ammonium quaternaires, les uraciles, les hydroxybenzonitriles, les imidazolinones.

2. Compositions selon la revendication 1 caractérisées en ce que, dans la formule (I), R et $R^1$ sont un radical alkyle de 1 à 4 atomes de carbone, $R^2$ est l'atome d'hydrogène.

3. Compositions selon l'une des revendications 1 ou 2 caractérisées en ce que le composé du groupe (II) est choisi dans le groupe constitué par l'alachlor, le métolachlor, la simazine, l'atrazine, la prométryne, le diuron, l'isoproturon, le linuron, le tébuthiuron, l'éthidimuron, le sulfométuron, le chlorsulfuron, le metsulfuron, le méthabenzthiazuron, l'oryzaline, la trifluraline, le diflufenican, le napropamide, le propanil, l'oxadiazon, le diméfuron, l'aminotriazole, le picloram, le bifénox, l'acifluorfen, l'acifluorfen-sodium, le fomesafen, l'oxyfluorfen, les esters de l'acifluorfen et d'alcool aliphatiques ou de glycolates ou de lactates, le quizalofop éthyl, le fluazifop butyl, le 2,4-D, le 2,4-DP, les MCPA, MCPP, le dicamba, le dalapon, la métribuzine, le carbétamide, l'EPTC, l'asulam, le norflurazon, la fluridone, le diquat, le paraquat, le bromacil, le bromoxynyl, l'ioxynyl, l'imazaquin et l'imazapur.

4. Compositions selon l'une des revendications 1 à 3 caractérisées en ce que la proportion de composés de formule (I) par rapport au (x) composé(s) de groupe (II) est compris entre 0,2 et 10, de préférence entre 0,25 et 4.

5. Compositions herbicides selon l'une des revendications 1 à 4, caractérisées en ce qu'elles contiennent des matières actives en association avec au moins un support inerte, usuel, acceptable en agriculture.

6. Compositions selon la revendication 5 caractérisées en ce qu'elles contiennent 0,05 à 95% de matière active.

7. Compositions selon l'une des revendications 5 à 6 caractérisées en ce qu'elles contiennent 5 à 40% d'agent tensioactif.

8. Compositions selon l'une des revendications 1 à 7 caractérisées en ce qu'elles sont sous forme de poudre soluble ou de poudre mouillable ou de granulé autodispersible.

9. Compositions herbicides comprenant les composants de nature et dans les proportions définies dans l'une des revendications 1 à 8, comme produits de combinaison pour une utilisation herbicide simultanée, séparée ou étalée dans le temps.

10. Procédé de désherbage, caractérisé en ce qu'on applique au contact des feuilles des végétaux à supprimer une dose efficace d'une composition selon l'une des revendications 1 à 9.

11. Procédé selon la revendication 10, caractérisé en ce qu'on applique une composition selon l'une des revendications 1 à 9, les matières actives étant appliquées à raison de 0,1 à 10 kg/ha, de préférence de 0,5 à 8 kg/ha.

12. Procédé de désherbage selon lequel on applique séquentiellement et à des périodes distinctes des produits de formule (I) et des produits de groupe (II) en nature et en quantités telles que définies dans l'une des revendications 1 à 11, le ou les produit(s) du groupe (II) pouvant être appliqués sur le sol.

**Patentansprüche**

1. Zusammensetzungen, dadurch gekennzeichnet, dass sie ein aktives Material der Formel (I)

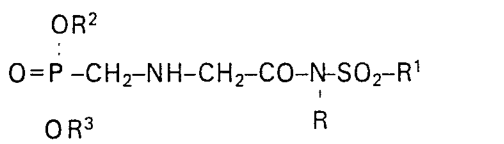
(I)

enthalten, worin bedeuten

– $R^1$ einen Kohlenwasserstoffrest, besonders Alkyl, Aryl oder Cycloalkyl, wobei diese verschiedenen Reste gegebenenfalls substituiert sein können, insbesondere durch Halogenatome oder Phenyl-, Cyano-, Alkyl-, Alkoxy-, Alkylcarboxylatgruppen,

– R das Wasserstoffatom oder eine der für $R^1$ angegebenen Bedeutungen und vorzugsweise eine Alkylgruppe mit 1 bis 4 Kohlenstoffatomen,

– $R^2$ und $R^3$ das Wasserstoffatom oder sind derart, dass $OR^2$ und $OR^3$ hydrolysierbare Gruppen sind, insbesondere Alkyl oder Aryl, gegebenenfalls substituiert, insbesondere durch Substituenten, wie diejenigen, die für $R^1$ angegeben sind, oder ein Salz dieser verschiedenen Produkte, wobei dieses aktive Material der Formel (I) assoziiert ist mit wenigstens einem aktiven Material der Gruppe (II), d.h. einem aktiven Material, ausgewählt aus der Gruppe, bestehend aus Chloracetamiden, Triazinen, Phenylharnstoffen, Thiadiazolylharnstoffen, Sulfonylharnstoffen, Benzothiazolylharnstoffen, Nitroanilinen, Phenoxynicotinaniliden, Amiden, Oxadiazolen, Aminotriazol, Picolinsäure, Phenoxybenzoesäure-Derivaten, Phenoxypropionsäure-Derivaten, Aryloxysäuren, Benzoesäuren, Propionsäuren, Triazinonen, Carbamaten, Pyridazinonen, Pyridonen, quaternären Ammoniumverbindungen, Uracilen, Hydroxybenzonitrilen, Imidazolinonen.

2. Zusammensetzungen gemäss Anspruch 1, dadurch gekennzeichnet, dass in der Formel (I) R und $R^1$ einen Alkylrest mit 1 bis 4 Kohlenstoffatomen bedeuten und $R^2$ das Wasserstoffatom ist.

3. Zusammensetzungen gemäss einem der Ansprüche 1 oder 2, dadurch gekennzeichnet, dass die Verbindung der Gruppe (II) ausgewählt ist aus der Gruppe, bestehend aus Alachlor, Metolachlor, Simazin, Atrazin, Prometryn, Diuron, Isoproturon, Linuron, Tebuthiuron, Ethidimuron, Sulfometuron, Chlorsulfuron, Metsulfuron, Methabenzthiazuron, Oryzalin, Trifluralin, Diflufenican, Napropamid, Propanil, Oxadiazon, Dimefuron, Aminotriazol, Picloram, Bifenox, Acifluorfen, Natrium-acifluorfen, Fomesafen, Oxyfluorfen, den Estern von Acifluorfen und den aliphatischen Alkoholen oder den Glykolaten oder den Lactaten, Ethyl quizalofop, Butyl-fluazifop, 2,4-D, 2,4-DP, MCPA, MCPP, Dicamba, Dalapon, Metribuzin, Carbetamid, EPTC, Asulam, Norflurazon, Fluridon, Diquat, Paraquat, Bromacil, Bromoxynyl, Ioxynyl, Imazaquin und Imazapur.

4. Zusammensetzungen gemäss einem der Ansprüche 1 bis 3, dadurch gekennzeichnet, dass das Mengenverhältnis der Verbindungen der Formel (I) in bezug auf die Verbindung(en) der Gruppe (II) zwischen 0,2 und 10, vorzugsweise zwischen 0,25 und 4, liegt.

5. Herbizide Zusammensetzungen, dadurch gekennzeichnet, dass sie aktive Materialien zusammen mit wenigstens einem inerten, üblichen, in der Landwirtschaft annehmbaren Träger enthalten.

6. Zusammensetzungen gemäss Anspruch 5, dadurch gekennzeichnet, dass sie 0,05 bis 95% aktives Material enthalten.

7. Zusammensetzungen gemäss einem der Ansprüche 5 bis 6, dadurch gekennzeichnet, dass sie 5 bis 40% oberflächenaktives Mittel enthalten.

8. Zusammensetzungen gemäss einem der Ansprüche 1 bis 7, dadurch gekennzeichnet, dass sie in Form von löslichem Pulver oder benetzbarem Pulver oder autodispergierbarem Granulat vorliegen.

9. Herbizide Zusammensetzungen, umfassend die Bestandteile der Natur nach und in den Zusammensetzungen, wie sie in einem der Ansprüche 1 bis 8 definiert sind, als Kombinationsprodukte zur gleichzeitigen, getrennten oder über eine Zeit verteilten herbiziden Verwendung.

10. Verfahren zur Unkrautvernichtung bzw. -bekämpfung, dadurch gekennzeichnet, dass man Blätter von Pflanzen, die vernichtet werden sollen, in Kontakt bringt mit einer wirksamen Dosis einer Verbindung gemäss einem der Ansprüche 1 bis 9.

11. Verfahren gemäss Anspruch 10, dadurch gekennzeichnet, dass man eine Zusammensetzung gemäss einem der Ansprüche 1 bis 9 anwendet, wobei die aktiven Materialien in einer Menge von 0,1 bis 10 kg/ha, vorzugsweise 0,5 bis 8 kg/ha, angewandt werden.

12. Verfahren zur Unkrautvernichtung bzw. -bekämpfung, dadurch gekennzeichnet, dass man aufeinanderfolgend und in unterschiedlichen Zeiträumen Produkte der Formel (I) und Produkte der Gruppe (II) in natura und in Mengen, wie sie in einem der Ansprüche 1 bis 11 definiert sind, anwendet, wobei das oder die Produkt(e) der Gruppe (II) auf den Boden aufgebracht werden können.

**Claims**

1. A composition which contains an active substance of formula:

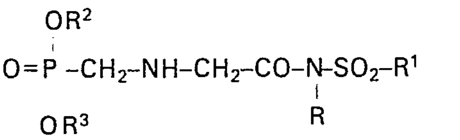

(I)

in which:

– $R^1$ denotes a hydrocarbon radical, in particular an alkyl, aryl or cycloalkyl radical, these various radicals optionally being able to be substituted in particular, with halogen atoms or phenyl, cyano, alkyl, alkoxyl or alkyl carboxylate groups,

– R denotes a hydrogen atom or has one of the meanings given for $R^1$, and is preferably an alkyl group having 1 to 4 carbon atoms,

– $R^2$ and $R^3$ denote a hydrogen atom or are such that $OR^2$ and $OR^3$ are hydrolysable groups, in particular alkyl or aryl groups, optionally substituted, in particular, with substituents such as those given for $R^1$, or a salt of these various products, the said active substance of formula (I) being combined with at least one active substance of the group (II) i.e. an active substance chosen from the group consisting of chloroacetamides, triazines, phenylureas, thiadiazolylureas, sulphonylureas, benzothiazolylureas, nitroanilines phenoxynicotinanilides, amides, oxadiazoles, aminotriazole, picolinic acid, phenoxybenzoic acid derivatives, phenoxypropionic derivatives, aryloxy acids, benzoic acids, propionic acids, triazinones, carbamates, pyridazinones, pyridones, quaternary ammonium compounds, uracils, hydroxybenzonitriles and imidazolinones.

2. A composition according to claim 1, in which, in the formula (I), R and $R^1$ are an alkyl radical having 1 to 4 carbon atoms and $R^2$ is a hydrogen atom.

3. A composition according to one of claims 1 or 2, in which the compound of the group (II) is chosen from the group consisting of alachlor, metolachlor, simazine, atrazine, prometryne, diuron, isoproturon, linuron, tebuthiuron, ethidimuron, sulfoleturon, chlorsulfuron, metsulfuron, methabenzthiazuron, oryzalin, trifluralin, diflufenican, napropamide, propanil, oxadiazon, dimefuron, aminotriazole, picloram, bifenox, acifluorfen, acifluorfensodium, fomesafen, oxyfluorfen, esters of acifluorfen and aliphatic alcohols or glycolates or lactates, quizalofop-ethyl, fluazifop-butyl, 2,4-D, 2,4-DP, MCPA, MCPP, dicamba, dalapon, metribuzin, carbetamide, EPTC, asulam, norflurazon, fluridone, diquat, paraquat, bromacil, bromoxynil, ioxynil, imazaquin and imazapur.

4. A composition according to one of claims 1 to 3, in which the proportion of compounds of formula (I) relative to the compound or compounds of group (II) is between 0.2 and 10, preferably between 0.25 and 4.

5. A herbicidal composition which contains active substances in combination with at least one common inert carrier which is agriculturally acceptable.

6. A composition according to claim 5, which contains 0.05 to 95% of active substance.

7. A composition according to one of claims 5 and 6, which contains 5 to 40% of surfactant.

8. A composition according to one of claims 1 to 7, which is in the form of a soluble powder or wettable powder or dry flowable.

9. A herbicidal composition containing the components of the nature and in the proportions defined in one of claims 1 to 8, as combination products for a herbicidal use which is simultaneous, separate or spread over a period of time.

10. A weed-clearing process, wherein an effective dose of a composition according to one of claims 1 to 9 is applied in contact with the leaves of the plants to be eliminated.

11. A process according to claim 10, wherein a composition according to one of claims 1 to 9 is applied, the active substances being applied in the proportion of 0.1 to 10 kg/ha, and preferably from 0.5 to 8 kg/ha.

12. A weed-clearing process according to which products of the formula (I) and products of group (II), of the nature and in the amounts as defined in one of claims 1 to 11, are applied sequentially and at different periods, the product or products of the group (II) being able to be applied on the soil.